# EUROPEAN PATENT SPECIFICATION

(11) **EP 3 434 603 B1**
(45) Date of publication and mention of the grant of the patent: **06.11.2019**
(21) Application number: 18184073.7
(22) Date of filing: 17.07.2018
(51) Int. Cl.: B64F 5/60, G01C 23/00, G07C 5/00, G06F 11/24, G01M 17/00, G07C 5/08, B64D 45/00

(54) **METHOD FOR TESTING THE FUNCTIONALITY OF AN ELECTRONIC FLIGHT BAG**
VERFAHREN ZUM TESTEN DER FUNKTIONALITÄT EINES ELEKTRONISCHEN PILOTENKOFFERS
PROCÉDÉ POUR TESTER LA FONCTIONNALITÉ D'UN SAC DE VOL ÉLECTRONIQUE

(30) Priority: 28.07.2017 US 201715663509
(43) Date of publication of application: 30.01.2019
(73) Proprietor: Honeywell International Inc. Intellectual Property - Patent Services, Morris Plains, NJ 07950 (US)
(72) Inventor: SINHA, Bijay, Morris Plains, NJ New Jersey 07950 (US); JUTURU, Suresh, Morris Plains, NJ New Jersey 07950 (US)
(74) Representative: Houghton, Mark Phillip

(56) References cited:
- US-A- 4 943 919
- US-A1- 2008 159 158
- US-A1- 2009 192 659
- US-A1- 2013 124 034

## Description

### TECHNICAL FIELD

The present invention generally relates to an electronic flight bag (EFB), and more particularly relates to a method for testing the functionality of an EFB.

### BACKGROUND

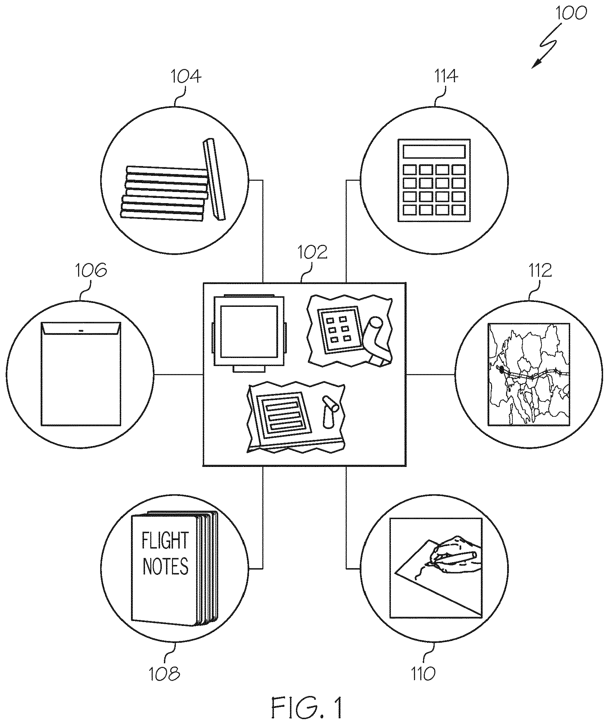

An EFB is commonly used in aviation operations to consolidate multiple resources into a single electronic package. An EFB is typically associated with a specific aircraft and includes resources necessary for the aircrew of that specific aircraft to operate effectively. FIG. 1 is a diagram 100 illustrating some examples of the capabilities of a typical EFB 102. The consolidated resources in this example include: aircraft manuals 104; notice to airmen (NOTAM) messages; flight plans 108; note pads 110; navigation charts 112; and a calculator 114. Consequently, the EFB has become a critical piece of equipment that allows an aircraft to function efficiently. Hence, there is a need for a method for testing the functionality of an EFB.

The documents US 2013/0124034, US 2009/0192659, US 2008/0159158 and US 4,943,919 describe systems and methods for testing the functionality of aircraft units.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for a method for testing the functionality of an EFB. The method comprises: establishing a communication link between the EFB and a central maintenance computer (CMC); initiating a power loss presence test of the EFB with the CMC, where the power loss presence test determines if critical applications of the EFB are recovered during an EFB restart after a power loss; generating a failure message that is transmitted to the CMC if the EFB fails the power loss presence test; initiating a communication bus test of the EFB with the CMC, where the communication bus test determines if adequate communication links exist between the EFB and a line replacement unit (LRU) of an aircraft associated with the EFB; and generating a failure message that is transmitted to the CMC if the EFB fails the communication bus test.

Furthermore, other desirable features and characteristics of the method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a diagram of examples of the functionality of an EFB in accordance with some embodiments;
FIG.2 shows a flowchart showing the general testing protocol between an EFB and a CMC;
FIG.3 shows a flowchart showing an example of a power loss testing protocol between an EFB and a CMC;
FIG. 4 shows a flowchart showing an example of a communication bus testing protocol between an EFB and a CMC; and
FIG. 5 shows a table showing an example of testing patterns for the communication bus testing protocol.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A method for testing the functionality of an EFB has been developed. One embodiment involves testing the functionality of the EFB with a central maintenance computer (CMC). The CMC is a ground based system that initiates a power loss presence test and a communication bus test with the EFB over a communication link. The power loss presence test determines if the EFB will be able to recover its functions after a system reboot due to a power loss or software glitch. The communication bus test determines if an adequate communication link exists between the EFB and a data source.

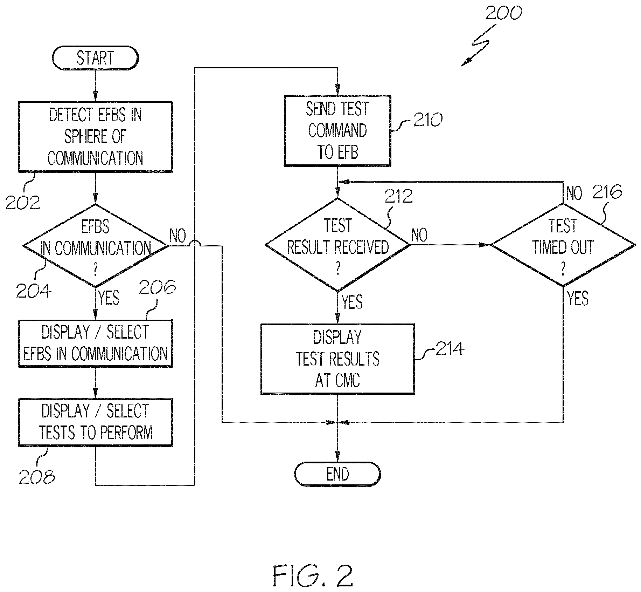

Turning now to FIG. 2, a flowchart is shown illustrating a general testing protocol 200 between an EFB and a CMC in one embodiment. First, the CMC will detect all EFBs within communication range 202. The EFB tests are ground-based and controlled by the CMC. The testing may be done as part of regularly scheduled maintenance plan for the EFB or as part of preflight checks for an aircraft associated with a specific EFB. The CMC may also perform the tests on a network of multiple EFBs simultaneously. The communication link between the EFB and CMC may use an existing data bus communication link. In alternative embodiments, the communication link may use any suitable wireless communication protocol such as Wi-Fi.

Once the CMC detects an EFB to be tested 204, the EFB and its designated information is displayed on a graphical user interface (GUI) of the CMC 206. The information displayed may include identification of the specific EFB, identification of the associated aircraft of the EFB, and the available test for the EFB. In some embodiments, not all the tests will be available to each EFB since each may be associated with different aircraft. The user of the CMC will select the desired test to perform on the EFB 208 and the CMC will send the appropriate test commands via the communication link 210.

Once the selected test command is received, the EFB proceeds to initiate the test. Upon initiating the selected test, a timeout counter is started. If the timeout counter exhausts before receipt of the test results, a test failure message is generated and sent to the CMC 216. Once the test is completed and the results are received 212, the results are transmitted to the CMC 214.

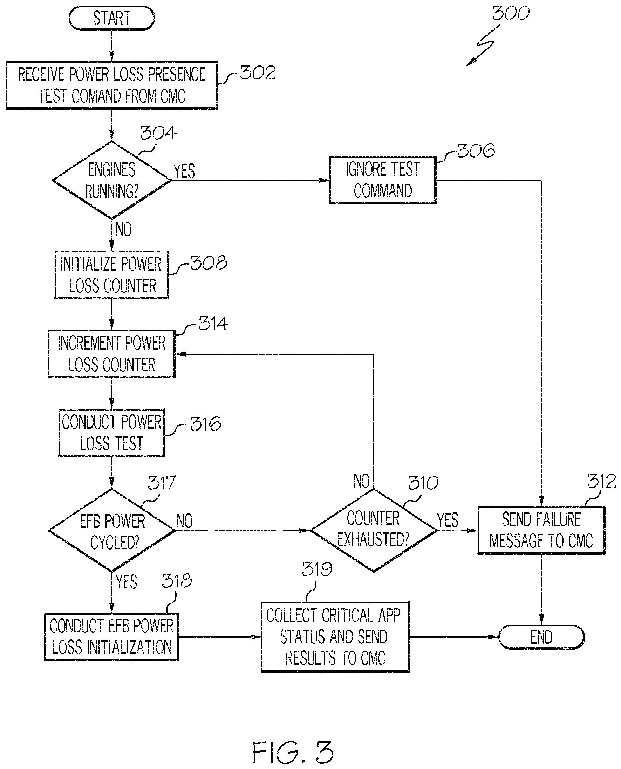

Turning now to FIG. 3, a flowchart is shown of an example of a power loss testing protocol 300 between an EFB and a CMC in accordance with one embodiment. First, the EFB receives the power loss presence test command from the CMC 302. Next, the testing protocol will determine if the engines of the aircraft associated with the EFB are currently running 304. If the engines are running the test command is ignored 306 and the test is aborted. If the aircraft engines are off, the test is initiated and a power loss counter is initialized 308 and it begins an incremental countdown 314. If the counter exhausts 310 before the results of the power loss test is completed 317, a failure message is sent to the CMC 312.

Upon initiation of the power loss presence test 316, the protocol may use an underlying operating system (OS) application programming interface (API) to perform a power cycle test. During the power cycle test 317, the EFB will identify and check all identified critical EFB applications upon initialization after a power loss for any issues and problems 318. Once the results and status of all critical EFB applications are collected, they are sent to and displayed at the CMC 319. Any problems with critical EFB applications after startup will be reported to the CMC as a test failure.

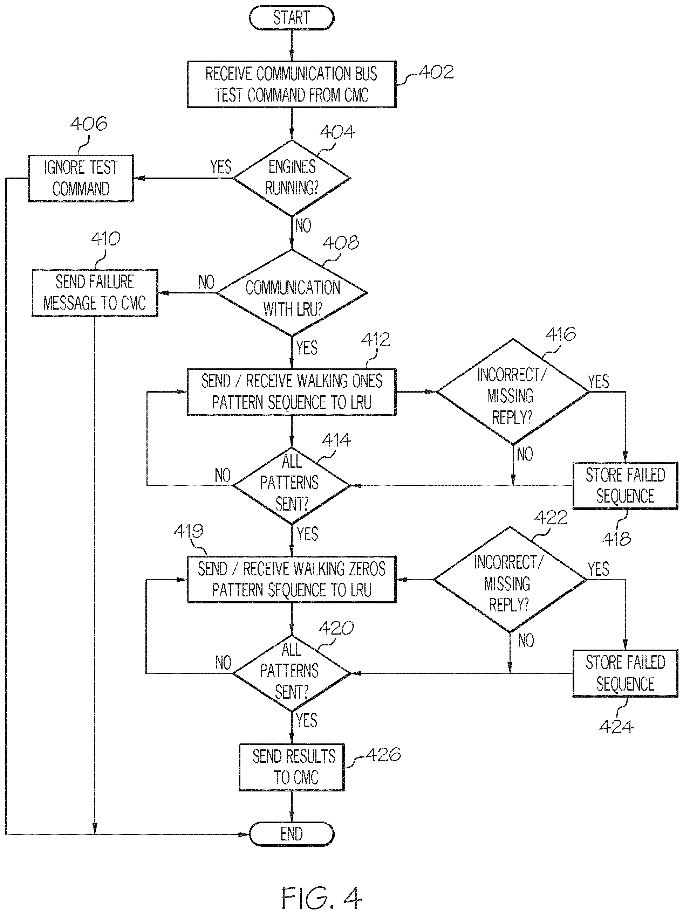

Turning now to FIG. 4, a flowchart is shown of a communication bus testing protocol 400 between an EFB and a CMC in accordance with the embodiment.
First, the EFB receives the communication bus test command from the CMC 402. Next, the testing protocol will determine if the engines of the aircraft associated with the EFB are currently running 404. If the engines are running, the test command is ignored 406 and the test is aborted.

The communication bus test utilizes a line replacement unit (LRU) to test if adequate communication links exist between the LRU and the EFB. An LRU is a modular component of an aircraft that it is designed to be replaced quickly at an operational location such as a radio or other data communication equipment. The LRU will serve as a host that generates a test pattern for the communication bus test in this embodiment. The test protocol will determine if communications exist between the LRU and the EFB 408. If communication is not established between the components, a test failure message is sent to the CMC 410.

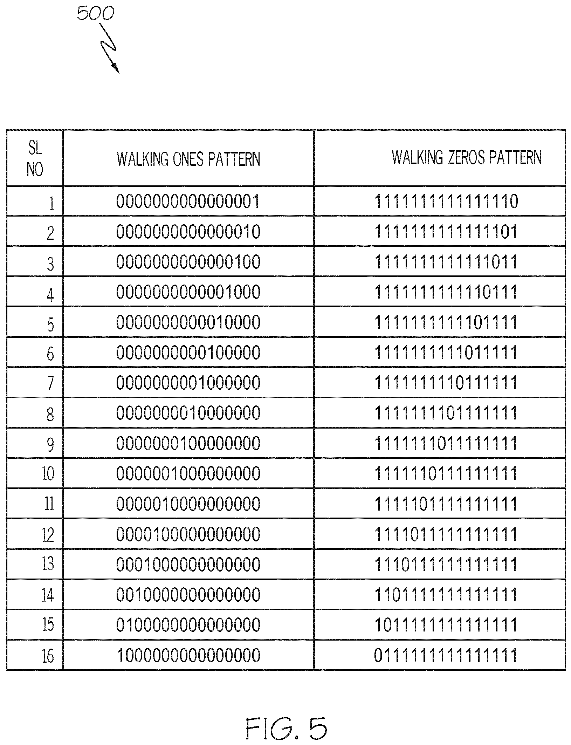

Upon initiation of the communication bus test, a series of data test patterns are sent. These data test past patterns are hosted on the LRU. In some embodiments, the data test patterns may be a "walking ones pattern" and\or a "walking zeros pattern". FIG. 5 is a table 500 showing examples of these two test patterns. These examples are a walking ones pattern and a walking zeros pattern for a 16-bit data communication bus. The size of the number patterns is chosen based on the size of the bus. In alternative embodiments, the size of the patterns may vary accordingly. In each test pattern, a series of signals are sent out with a unique value for the specific bit of the data communication bus that is being tested. For example, in the walking ones pattern, a zero is the predominant data bit value while a one is the unique value. The one value occupies a single bit in the field for a single signal. The position of the one value shifts to the adjacent bit in the field during the subsequent signal. As shown in the walking ones pattern chart, a series of 16 signals are sent with the one value shifting position for each signal. This gives the appearance of the one value "walking" through different positions during the series of signals. As shown in the walking zeros pattern, the technique is similar but the values are reversed. Specifically, the one value is predominant while the zero value is unique. In this pattern, the zero value shifts position between the signals.

Returning now to FIG. 4, the protocol sends a walking ones pattern sequence from the LRU to the EFB which receives the reply 412. As each pattern is sent 414, the results are checked at the EFB to detect any missing or incorrect patterns 416. If any patterns are missing or incorrect, the sequence is stored until the test pattern is complete 418. After the walking ones pattern sequence is completed, the walking zeros test pattern is sent from the LRU to the EFB which receives the reply 419. As each walking zero pattern is sent 420, the reply is checked at the EFB to detect any missing or incorrect patterns 422. If any sequence is missing or incorrect, the missing sequence is stored until the test pattern is complete 424. After the walking zeros pattern sequence is completed, the results of both test patterns are retrieved and sent to the CMC 426. Any missing or incorrect reply in either the walking ones test pattern or the walking zeros test pattern will be reported to the CMC as a test failure.

While this embodiment has been described for the power loss presence test and the communication bus test of the EFB, other tests of critical functionality of the EFB may be used in alternative embodiments. For example, a testing protocol of an electronic memory unit of the EFB may be conducted to determine if the memory unit is functioning properly. For example, a read/write memory unit of the EFB may be tested and any failure of the memory unit is reported to the CMC. In alternative embodiments, the microprocessor of the EFB may be tested to determine if it is functioning properly. For example, the testing protocol may send a sample command to test the execution of the processor and any failure of the processor is reported to the EFB.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for testing the functionality of an electronic flight bag (EFB), comprising:
establishing a communication link between the EFB and a central maintenance computer (CMC);
initiating a power loss presence test of the EFB with the CMC, where the power loss presence test determines if critical applications of the EFB are recovered during an EFB restart after a power loss;
generating a failure message that is transmitted to the CMC if the EFB fails the power loss presence test;
initiating a communication bus test of the EFB with the CMC, where the communication bus test determines if adequate communication links exist between the EFB and a line replacement unit (LRU) of an aircraft associated with the EFB; and
generating a failure message that is transmitted to the CMC if the EFB fails the communication bus test.

2. The method of Claim 1, further comprising:
initiating a memory test of the EFB with the CMC, where the memory test determines if a memory unit of the EFB is functioning properly; and
generating a failure message that is transmitted to the CMC if the EFB fails the memory test.

3. The method of Claim 1, further comprising:
initiating a processor test of the EFB with the CMC, where the processor test determines if the processor unit of the EFB is functioning properly; and
generating a failure message that is transmitted to the CMC if the EFB fails the processor test.

4. The method of Claim 1, further comprising:
determining if the engines of an aircraft associated with the EFB are currently running; and
canceling the initiation of the communication bus test of the EFB while the engines are running

5. The method of Claim 1, further comprising:
determining if the engines of an aircraft associated with the EFB are currently running; and
canceling the initiation of the power loss presence test of the EFB while the engines are running.

6. The method of Claim 1, further comprising:
starting a timeout counter upon each initiation of a test of the EFB with the CMC; and
generating a failure message that is transmitted to the CMC if the timeout counter exhausts before receipt of results of the test of the EFB at the CMC.

7. The method of Claim 1, where the communication bus test uses a sequence number pattern to test the communication links.

8. The method of Claim 7, where the sequence number pattern comprises a walking ones pattern.

9. The method of Claim 7, where the sequence number pattern comprises a walking zeros pattern.

## Patentansprüche

1. Verfahren zum Testen der Funktionalität eines elektronischen Pilotenkoffers (EFB), umfassend:
Einrichten einer Kommunikationsverknüpfung zwischen dem EBF und einem Zentralverwaltungscomputer (CMC);
Einleiten eines Leistungsverlust-Präsenztests des EFB mit dem CMC, wobei der Leistungsverlust-Präsenztest bestimmt, ob kritische Anwendungen des EFB während eines EFB-Neustarts nach einem Leistungsverlust wiederhergestellt werden;
Erzeugen einer Fehlernachricht, die an den CMC übertragen wird, wenn der EFB den Leistungsverlust-Präsenztest nicht besteht;
Einleiten eines Kommunikationsbustests des EFB mit dem CMC, wobei der Kommunikationsbustest bestimmt, ob adäquate Kommunikationsverknüpfungen zwischen dem EFB und einer Line-Replacement-Unit (LRU) eines mit dem EFB assoziierten Luftfahrzeugs existieren; und
Erzeugen einer Fehlernachricht, die an den CMC übertragen wird, wenn der EFB den Kommunikationsbustest nicht besteht.

2. Verfahren nach Anspruch 1, ferner umfassend:
Einleiten eines Speichertests des EFB mit dem CMC, wobei der Speichertest bestimmt, ob eine Speichereinheit des EFB einwandfrei funktioniert; und
Erzeugen einer Fehlernachricht, die an den CMC übertragen wird, wenn der EFB den Speichertest nicht besteht.

3. Verfahren nach Anspruch 1, ferner umfassend:
Einleiten eines Prozessortests des EFB mit dem CMC, wobei der Prozessortest bestimmt, ob die Prozessoreinheit des EFB einwandfrei funktioniert; und
Erzeugen einer Fehlernachricht, die an den CMC übertragen wird, wenn der EFB den Prozessortest nicht besteht.

4. Verfahren nach Anspruch 1, ferner umfassend:
Bestimmen, ob die Triebwerke eines mit dem EFB assoziierten Luftfahrzeugs gegenwärtig laufen; und
Abbrechen der Einleitung des Kommunikationsbustests des EFB, während die Triebwerke laufen.

5. Verfahren nach Anspruch 1, ferner umfassend:
Bestimmen, ob die Triebwerke eines mit dem EFB assoziierten Luftfahrzeugs gegenwärtig laufen; und
Abbrechen der Einleitung des Leistungsverlust-Präsenztests des EFB, während die Triebwerke laufen.

6. Verfahren nach Anspruch 1, ferner umfassend:
Starten eines Zeitüberwachung-Zählers nach jeder Einleitung eines Tests des EFB mit dem CMC; und
Erzeugen einer Fehlernachricht, die an den CMC übertragen wird, wenn der Zeitüberwachung-Zähler vor dem Empfang von Ergebnissen des Tests des EFB an dem CMC abläuft.

7. Verfahren nach Anspruch 1, wobei der Kommunikationsbustest ein Abfolgenummernmuster zum Testen der Kommunikationsverknüpfungen verwendet.

8. Verfahren nach Anspruch 7, wobei das Abfolgenummernmuster ein Walking-Ones-Muster umfasst.

9. Verfahren nach Anspruch 2, wobei das Abfolgenummernmuster ein Walking-Zeros-Muster umfasst.

## Revendications

1. Procédé de test de la fonctionnalité d'un sac de vol électronique (EFB), comprenant :
l'établissement d'une liaison de communication entre l'EFB et un calculateur central de maintenance (CMC) ;
le lancement d'un test de présence de panne d'alimentation de l'EFB avec le CMC, le test de présence de panne d'alimentation déterminant si des applications critiques de l'EFB sont rétablies au cours d'un redémarrage de l'EFB suite à une panne d'alimentation ;
la génération d'un message d'échec qui est transmis au CMC si l'EFB échoue au test de présence de panne d'alimentation ;
le lancement d'un test de bus de communication de l'EFB avec le CMC, le test de bus de communication déterminant s'il existe des liaisons de communication adéquates entre l'EFB et une unité de remplacement en ligne (LRU) d'un aéronef associé à l'EFB ; et
la génération d'un message d'échec qui est transmis au CMC si l'EFB échoue au test de bus de communication.

2. Procédé selon la revendication 1, comprenant en outre :
le lancement d'un test de mémoire de l'EFB avec le CMC, le test de mémoire déterminant si une unité mémoire de l'EFB fonctionne correctement ; et
la génération d'un message d'échec qui est transmis au CMC si l'EFB échoue au test de mémoire.

3. Procédé selon la revendication 1, comprenant en outre :
le lancement d'un test de processeur de l'EFB avec le CMC, le test de processeur déterminant si l'unité processeur de l'EFB fonctionne correctement ; et
la génération d'un message d'échec qui est transmis au CMC si l'EFB échoue au test de processeur.

4. Procédé selon la revendication 1, comprenant en outre :
la détermination si les moteurs d'un aéronef associé à l'EFB sont en train de tourner ; et
l'annulation du lancement du test de bus de communication de l'EFB pendant que les moteurs tournent.

5. Procédé selon la revendication 1, comprenant en outre :
la détermination si les moteurs d'un aéronef associé à l'EFB sont en train de tourner ; et
l'annulation du lancement du test de présence de panne d'alimentation de l'EFB pendant que les moteurs tournent.

6. Procédé selon la revendication 1, comprenant en outre :
le déclenchement d'un compteur de temporisation à chaque lancement d'un test de l'EFB avec le CMC ; et
la génération d'un message d'échec qui est transmis au CMC si le compteur de temporisation arrive à expiration avant la réception de résultats du test de l'EFB au niveau du CMC.

7. Procédé selon la revendication 1, dans lequel le test de bus de communication utilise un vecteur de numéros de séquence pour tester les liaisons de communication.

8. Procédé selon la revendication 7, dans lequel le vecteur de numéros de séquence comprend un vecteur de uns de type Walking One.

9. Procédé selon la revendication 7, dans lequel le vecteur de numéros de séquence comprend un vecteur de zéros de type Walking Zero.
